# EUROPÄISCHE PATENTSCHRIFT

(11) **EP 2 813 737 B1**
(45) Veröffentlichungstag und Bekanntmachung des Hinweises auf die Patenterteilung: **28.11.2018**
(21) Anmeldenummer: 14171934.4
(22) Anmeldetag: 11.06.2014
(51) Int. Cl.: F16K 31/06, F16F 9/34

(54) **Kolbenschieberventil**
Piston slide valve
Soupape de robinet à piston

(30) Priorität: 14.06.2013 DE 102013106214
(43) Veröffentlichungstag der Anmeldung: 17.12.2014
(73) Patentinhaber: Rausch & Pausch GmbH, 95100 Selb (DE)
(72) Erfinder: Bähr, Sebastian, 09726 Gefell (DE); Döhla, Werner, 95482 Gefrees (DE); Kemnitz, Rocco, 08606 Bobenneukirchen (DE)
(74) Vertreter: Klunker IP Patentanwälte PartG mbB

(56) Entgegenhaltungen:
- DE-A1- 4 206 380
- DE-A1-102006 014 463
- DE-A1-102008 035 899
- DE-B3-102007 058 620

## Beschreibung

Die vorliegende Erfindung betrifft ein Kolbenschieberventil, insbesondere ein Stetigdrosselventil oder Proportionaldrosselventil, beispielsweise für einen Stoßdämpfer eines Fahrzeugs, sowie ein Verfahren zum Betreiben des Ventils.

Ein solches Ventil kann als Bypass zu einem hydraulischen Stoßdämpfer eines Fahrzeugs eingesetzt werden, um die Dämpfercharakteristik "hart" oder "weich" einzustellen. Dabei verursachen Druckstöße am Dämpfer eine Fluidverdrängung aus einer Dämpferkammer in eine andere Dämpferkammer. Dies geschieht über ein passives Ventil im Dämpfer und ein dazu parallel geschaltetes, verstellbares Ventil. Das verstellbare Ventil kann durch ein erfindungsgemäßes elektromagnetisch betätigtes Kolbenschieberventil gebildet werden, welches je nach Bestromung der Erregerspule des Elektromagneten seinen Strömungswiderstand und dadurch die Dämpfungswirkung des Gesamtsystems verändert.

Elektromagnetisch betätigte Proportionaldrosseln ermöglichen eine gezielte Veränderung des Durchflussquerschnitts unabhängig von Hilfsgrößen. Die Proportionalcharakteristik lässt sich durch geeignete Abstimmung und Dimensionierung der Bauteile des elektromagnetischen Antriebs erzielen. Dadurch wird erreicht, dass der Hub des Magnetankers zumindest über weite Strecken näherungsweise proportional zum Antriebsstrom ansteigt. Im Falle von Kolbenschieberventilen mit einer Kolbenschieberanordnung, bei denen der freie Querschnitt eines Fluidkanals bzw. mehrerer Fluidkanäle, die zwei Fluidanschlüsse des Ventilgehäuses miteinander verbinden, mittels eines axial verschieblichen Kolbens geregelt wird, ermöglicht diese Proportionalcharakteristik eine gezielte Veränderung des freien Querschnitts des Fluidkanals bzw. der Fluidkanäle. Die Fluidkanäle können zum Beispiel derart angeordnet und dimensioniert sein, dass bei einer linearen Erhöhung des Antriebsstroms eine dazu möglichst proportionale, also ebenfalls lineare Veränderung der freien Querschnittsfläche erzielt wird.

Bekannte Ventile sind üblicherweise nur für einen strömungsrichtungsgebundenen Einsatz geeignet. Solche Ventile sind beispielsweise in DE 10 2007 058 620 B3 und DE 10 2008 035 899 A1 offenbart. Diese Ventile weisen einen Schieber oder Kolben mit einem becherförmigen oder ringartigen Kolbenabschnitt zum Regeln radial verlaufender Fluiddurchtrittsöffnungen auf. Es ist üblicherweise notwendig, zwei getrennte Ventile, d.h. ein Ventil pro Strömungsrichtung, sowie die entsprechende Strömungsführung, einschließlich Rückschlagventilen, Strömungskreuzungen und dergleichen, vorzusehen. Wegen des erforderlichen Bauraums einer solchen Anordnung wird diese üblicherweise außen an einem Stoßdämpfer angebracht, da der Bauraum im Innern des Stoßdämpfers begrenzt ist. Die außen an dem Stoßdämpfer angebrachten Ventile stellen allerdings ein Kollisionsrisiko mit umliegenden Bauteilen des Fahrzeugs dar.

Abhängig von der Anwendung kann es erforderlich sein, dass das Ventil im stromlosen Zustand geöffnet ("normal opened"; NO) oder, wie in DE 10 2007 058 620 B3, geschlossen ("normal closed", NC) ist. Der stromlose Zustand wird auch als Fail-Safe-Zustand bezeichnet, da das Ventil diesen Zustand beim Abschalten oder einem Ausfall des Gesamtsystems, beispielsweise bei einem Ausfall der Stromversorgung, einnimmt. Wird jedoch beispielsweise ein Ventil, welches normal geschlossen ist, im Betrieb überwiegend in einem geöffneten Zustand gehalten, ist es notwendig, das Ventil zum Offenhalten ständig mit großer Stromstärke zu betreiben. Dies führt zu entsprechendem Energieverbrauch, Erwärmung des Ventils und letztlich schlechtem Wirkungsgrad des Gesamtsystems. Wünschenswert kann auch ein Fail-Safe-Zustand sein, in dem das Ventil, wie in DE 10 2008 035 899 A1, einen Zwischenzustand zwischen "vollständig geöffnet" und "vollständig geschlossen" einnimmt, um im stromlosen Zustand statt eines Extremzustands des Stoßdämpfers eine mittlere Dämpfercharakteristik zu erreichen. Dennoch soll das Ventil mit geringer Stromstärke vollständig geöffnet werden können.

Aufgabe der vorliegenden Erfindung ist es, den Bauraum solcher Kolbenschieberventile zu reduzieren.

Diese Aufgabe wird durch ein bidirektional wirkendes Kolbenschieberventil und ein Verfahren zum Betreiben des Kolbenschieberventils mit den Merkmalen der unabhängigen Ansprüche gelöst. In davon abhängigen Ansprüchen sind vorteilhafte Ausgestaltungen und Weiterbildungen der Erfindung angegeben.

Erfindungsgemäß greift ein ringartiger Kolbenabschnitt des Kolbens in den Fluidkanal derart ein, dass ein an den Kolbenabschnitt radial innen angrenzender Abschnitt des Fluidkanals und ein an den Kolbenabschnitt radial außen angrenzender Abschnitt des Fluidkanals bezüglich des in den Fluidkanal eingreifenden Kolbenabschnitts zueinander symmetrisch sind. Auf diese Weise wird erreicht, dass das Ventil in beiden Strömungsrichtungen im Wesentliche die gleiche Strömungscharakteristik aufweist, d.h. das Ventil besitzt eine richtungsunabhängige Ventilcharakteristik. Somit ist nur ein Ventil nötig, das platzsparend beispielsweise im Inneren eines Stoßdämpfers für ein Kraftfahrzeug untergebracht werden kann. Vorzugsweise weist das Ventil einen radialen und einen axialen Fluidanschluss auf.

Symmetrisch bedeutet dabei insbesondere, dass die Fluidkanalabschnitte bezüglich des in den Fluidkanal eingreifenden Kolbenabschnitts, insbesondere einer Mittelachse des Kolbenabschnitts, spiegelsymmetrisch oder punktsymmetrisch sind. Entscheidend ist, dass die an den Kolbenabschnitt angrenzenden Abschnitte des Fluidkanals derart symmetrisch ausgebildet sind, dass sich in beiden Strömungsrichtungen die gleiche Strömungscharakteristik ergibt. Insbesondere sind die radial innen und radial außen direkt an den Kolbenabschnitt angrenzenden Strömungsquerschnitte des Fluidkanals identisch ausgebildet. Der Kolben regelt die freie Querschnittsfläche des Fluidkanals somit anders als bei bekannten Drosselventilen in Kolbenbauweise nicht an einem der Enden des Fluidkanals, beispielsweise direkt an einer Fluideintrittsöffnung, sondern greift in den Fluidkanal beabstandet zu den Enden des Fluidkanals ein. Dies hat dann zur Folge, dass sich radial innerhalb und radial außerhalb des in den Fluidkanal eingreifenden Kolbenabschnitts symmetrische Abschnitte des Fluidkanals befinden. Dabei ergibt sich auch der weitere Vorteil, dass der Kolbenabschnitt aufgrund seines gegenüber einem herkömmlichen Kolben größeren Innendurchmessers relativ zum Ventilgehäuse einen großen Strömungsquerschnitt regeln kann.

Gemäß einem bevorzugten Ausführungsbeispiel verlaufen der an den Kolbenabschnitt radial innen angrenzende Abschnitt des Fluidkanals und der an den Kolbenabschnitt radial außen angrenzende Abschnitt des Fluidkanals zueinander fluchtend in radialer Richtung. Aufgrund der Symmetrie ergibt sich, dass die beiden Fluidkanalabschnitte den gleichen Querschnitt aufweisen. Vorzugsweise ist der Fluidkanal somit linear in radialer Richtung ausgebildet oder weist zumindest einen in radialer Richtung linear verlaufenden Teil auf, in den der Kolben eingreift. Der Ventilaufbau kann so kompakt gestaltet werden, insbesondere hinsichtlich der axialen Baulänge des Ventils.

Vorzugsweise ist der Kolben in einer umlaufenden Nut im Inneren des Ventilgehäuses radial außen geführt. Alternativ kann der Kolben auch radial innen oder sowohl radial innen als auch radial außen geführt sein, wobei dann die umlaufende Nut insbesondere eine Weite aufweist, die einer Dicke des Kolbenabschnitts des vorzugsweise becherförmigen Kolbens entspricht. Durch die Führung radial außen wird erreicht, dass nur geringe Flächenanteile des Kolbens direkt unter dem Einfluss der Strömung stehen, nämlich insbesondere diejenigen Flächenanteile, die in den Fluidkanal eintauchen und den freien Querschnitt des Fluidkanals regeln. Im Gegensatz zu Kolben, die beispielsweise auf ihrer radial außen liegenden Seite nahezu vollständig der Strömung ausgesetzt sind, ergibt sich aufgrund des geringeren Einflusses der Strömung eine verbesserte Steuerung des Ventils. Darüber hinaus kann so auch der Magnetantrieb des Ventils in einem strömungsabgekoppelten Raum angeordnet werden. Vorteilhafterweise quert die Nut den Fluidkanal dabei derart, dass sie sich axial in beide Richtungen über einen Querschnitt des Fluidkanals hinaus erstreckt. Auf diese Weise wird insbesondere die Schließposition hinsichtlich der Dichtheit verbessert, da der in den Fluidkanal eingreifende Kolbenabschnitt den Querschnitt des Fluidkanals vollständig kreuzen und darüber hinaus vorgeschoben werden kann.

Bevorzugt ist der Kolben druckausgeglichen gestaltet, um ihn mit verhältnismäßig geringer magnetischer Kraft bewegen zu können. Dazu weist der in den Fluidkanal eingreifende Kolbenabschnitt vorzugsweise zumindest eine axiale Fluiddurchtrittsöffnung auf, welche den Fluidkanal mit einem Teil eines Hohlraums verbindet, in welchem der Kolben axial verschieblich ist. Weiter vorzugsweise weist der Kolben zumindest eine weitere axiale Fluiddurchtrittsöffnung auf, welche die Teile des Hohlraums auf axial gegenüberliegenden Seiten des Kolbens miteinander verbindet. Ein Fluid kann somit in den Hohlraum eindringen, in dem der Kolben geführt ist. Bei einer axialen Verlagerung des Kolbens kann das Fluid zwischen den axial gegenüberliegenden Seiten des Kolbens hin und her strömen und muss beispielsweise nicht komprimiert werden, was eine erhöhte Magnetkraft erfordern würde. Durch den Druckausgleich des Kolbens können Einflüsse der Strömung auf den Kolben reduziert werden. In dem Hohlraum herrscht ein Druck, der zwischen dem Druck an den beiden Fluidanschlüssen liegt, d.h. zwischen einem Eingangsdruck und einem Ausgangsdruck.

In einer bevorzugten Ausgestaltung weist das Ventil zumindest eine axiale Bohrung auf, welche an einen der Fluidanschlüsse angrenzt und in welcher ein axial verschieblicher Druckrückführstift derart angeordnet ist, dass ein Fluiddruck an dem entsprechenden Fluidanschluss mittels des Druckrückführstifts auf den Kolben übertragbar ist, so dass der Kolben in Richtung einer Offenstellung gedrängt wird. Vorzugsweise ist eine derartige axiale Bohrung mit einem Druckrückführstift für beide Fluidanschlüsse vorgesehen. Über die Druckrückführstifte können Strömungskräfte am Kolben kompensiert werden, indem der Kolben mittels der Druckrückführstifte, die den Druck an dem entsprechenden Fluidanschluss auf den Kolben übertragen, in Richtung der Offenstellung gedrängt wird. Dies kann auch gezielt und gewünscht als sogenanntes Blow-Off-Verhalten des Ventils ausgenutzt werden. Bei einem steigenden Anstieg des Volumenstroms, beispielsweise durch einen Stoß auf den Stoßdämpfer, an dem das Ventil montiert ist, ist der Druckverlust am Ventil begrenzt, da das Ventil mittels der Druckrückführstifte dann kurz geöffnet wird. Sind entsprechende Druckrückführstifte zu beiden Fluidanschlüssen vorgesehen, ist dieses Verhalten in beiden Strömungsrichtungen nutzbar. Über den Querschnitt und die Anzahl der Druckrückführstifte kann die Kennlinie des Ventils gezielt beeinflusst werden. Die Wirkung der Druckrückführstifte wird insbesondere dadurch ermöglicht, dass in dem Hohlraum, in welchem der Kolben verschoben wird, ein Druck herrscht, der zwischen dem Druck an den beiden Fluidanschlüssen, d.h. einem Eingangsdruck und einem Ausgangsdruck liegt. Von Bedeutung ist dabei insbesondere das Druckgefälle zwischen der Eingangsseite und dem Hohlraum. Würde in dem Hohlraum der Eingangsdruck herrschen, wäre eine Verlagerung des Kolbens mittels der Druckrückführstifte nicht möglich.

Vorzugsweise umfasst die Kolbenschieberanordnung einen ersten und einen zweiten jeweils axial verschieblichen Magnetanker, wobei der erste und zweite Magnetanker durch Bestromung der Spule entgegen einer Kraft mindestens einer zweiten Vorspannfeder axial aufeinander zu verschieblich sind. Mittels des "zweiteiligen" Magnetankers lässt sich die Ventilsteuerung verbessern, insbesondere eine beliebige gewünschte Ventilstellung im Fail-Safe-Zustand erreichen. Darüber hinaus kann dadurch ermöglicht werden, dass der Kolben bei stetigem Anstieg der Erregerstromstärke zunächst in eine Richtung und dann in eine dazu entgegengesetzte Richtung bewegbar ist. Bei einem elektromagnetischen Kolbenschieberventil mit nur einem "einteiligen" Magnetanker kann der Kolben mit dem Anstieg der Stromstärke nur in eine Richtung bewegt werden und die Ventilstellung im Fail-Safe-Zustand ist entweder "maximal offen" oder "maximal geschlossen". In einer bevorzugten Ausgestaltung des erfindungsgemäßen Ventils befindet sich der Kolben im stromlosen Zustand der Spule in einer Zwischenstellung, in welcher der Fluidkanal durch den Kolben teilweise freigegeben ist. Dadurch wird beim Abschalten oder Ausfall des Systems erreicht, dass beispielsweise ein Stoßdämpfer eine mittelharte Stellung einnimmt, also weder ganz weich noch ganz hart ist.

Vorzugsweise wirken die Kräfte der ersten und zweiten Vorspannfeder in entgegengesetzte Richtungen. Der erste und zweite Magnetanker lassen sich mittels einer Initialbestromung der Spule gegen die Kraft der zweiten Vorspannfeder derart aufeinander zu bewegen, dass sie aufeinander treffen, wobei der erste und zweite Magnetanker in dieser Stellung gehalten werden, solange die Bestromung der Spule nicht unter eine Minimalbestromung absinkt. Der erste und zweite Magnetanker haften dabei magnetisch aneinander. Die Initialbestromung ist typischerweise ein Impuls mit einer bestimmten Stromstärke, der dazu dient, den Kolben aus der Fail-Safe-Stellung heraus zu bewegen. Die zweite Vorspannfeder ist vorteilhaft verhältnismäßig schwach gewählt, jedenfalls schwächer als die erste Vorspannfeder. Der Kolben wird bei der Minimalbestromung mittels der ersten Vorspannfeder dann vorzugsweise in eine Stellung gedrängt, in welcher die Querschnittsfläche des Fluidkanals von dem Kolben maximal freigegeben ist. Mit anderen Worten, das Ventil, welches im stromlosen Zustand teilweise geöffnet ist, lässt sich mit geringer Stromstärke vollständig öffnen. Dies ist vorteilhaft, wenn beispielsweise ein Stoßdämpfer die meiste Zeit mit der Charakteristik "weich" eingestellt sein soll, da der Stromverbrauch, die Erwärmung und der Verschleiß gering gehalten werden.

Weiter vorzugsweise wirken die Kräfte der ersten und zweiten Vorspannfeder derart, dass sich oberhalb der Minimalbestromung die gesamte Kolbenschieberanordnung als Einheit entgegen der Kraft der ersten Vorspannfeder in eine Richtung bewegt, in der sich die freie Querschnittsfläche des Fluidkanals durch den Kolben verringert. Der erste und zweite Magnetanker bleiben somit auch bei weiterer Bestromung aneinander haften und bilden gewissermaßen einen gemeinsamen Magnetanker. In diesem Regelbetrieb kann die freie Querschnittsfläche des Fluidkanals vorzugsweise proportional zum anliegenden Strom geregelt werden.

Die Kräfte der ersten und zweiten Vorspannfeder wirken vorzugsweise des Weiteren derart, dass sich ab Unterschreiten der Minimalbestromung, deren Wert kleiner ist als der der Initialbestromung, der erste und zweite Magnetanker voneinander weg bewegen und sich ein Gleichgewicht der Kräfte der ersten und zweiten Vorspannfeder einstellt, wenn sich der Kolben in Richtung der Zwischenstellung bewegt hat, in welcher der Fluidkanal durch den Kolben teilweise freigegeben ist. Dies entspricht beispielsweise einem Abschalten der Stromversorgung. Die relativ schwache zweite Vorspannfeder trennt den ersten und zweiten Magnetanker voneinander, was es erlaubt, dass sich der Kolben im stromlosen Zustand in einer Zwischenstellung befindet. Das Gleichgewicht der Vorspannfedern kann durch entsprechende Wahl der Federn wie gewünscht eingestellt werden. Darüber hinaus kann eine Justierschraube vorgesehen sein, um die erste Vorspannfeder stärker zu spannen oder zu entlasten.

Vorteilhaft ergeben sich daher folgende Zustände des Kolbenschieberventils. Im stromlosen Zustand des Kolbenschieberventils ist die Fluiddurchtrittsöffnung teilweise, beispielsweise zur Hälfte, verschlossen. Andere Bruchteile der Querschnittsfläche, welche im Fail-Safe-Zustand verschlossen bzw. frei sind, sind abhängig von der Anwendung wählbar. Bei dieser Anwendung ist eine teilweise geschlossene Fail-Safe-Stellung gewünscht, da beispielsweise bei einem Ausfall des Systems das Kolbenschieberventil automatisch in eine Stellung gebracht wird, die eine mittelharte Einstellung eines Stoßdämpfers bewirkt, so dass keine unkomfortablen oder unter Umständen sogar gefährlichen extremen Zustände des Stoßdämpfers, nämlich sehr hart oder sehr weich, eintreten. Dennoch ist das Ventil bei einer Minimalbestromung - nach vorheriger Initialbestromung - maximal geöffnet, so dass während des Betriebs des Ventils im offenen Zustand wenig Energie verbraucht wird. Bei weiterer Bestromung und vorzugsweise bereits ab einer die Minimalbestromung übersteigenden Bestromung ist das Ventil mittels des Kolbens (der auch "Regelschieber" genannt werden kann) nach und nach verschließbar. Diese vorteilhafte Abfolge von teilweise geschlossener, geöffneter, gedrosselter und schließlich vollständig verschlossener Querschnittsfläche der Fluiddurchtrittsöffnung mit steigender Stromstärke wird durch die Kolbenschieberanordnung mit zwei Magnetankern erreicht.

Die erste Vorspannfeder, die sogenannte Regelfeder, ist vorzugsweise progressiv, d.h. sie weist eine progressive Federkennlinie auf, wobei die Federkraft mit steigendem Federweg nicht linear sondern stärker ansteigt. Alternativ kann als erste Vorspannfeder jedoch auch eine Feder mit linearer Federkennlinie und Federkonstante verwendet werden.

Im Folgenden wird die Erfindung beispielhaft anhand der begleitenden Zeichnungen beschrieben. Darin zeigen:
Fig. 1 ein erstes Ausführungsbeispiel eines Kolbenschieberventils im stromlosen Zustand,
Fig. 2 das Ventil aus Fig. 1 im maximal geöffneten Zustand,
Fig. 3 das Ventil aus Fig. 1 im angedrosselten Zustand,
Fig. 4 das Ventil aus Fig. 1 im geschlossenen Zustand,
Fig. 5 ein zweites Ausführungsbeispiel eines Kolbenschieberventils im stromlosen Zustand,
Fig. 6 das Ventil aus Fig. 5 in einer um 45° um die Ventilachse gedrehten Ansicht und
Fig. 7 ein drittes Ausführungsbeispiel eines Kolbenschieberventils im angedrosselten Zustand.

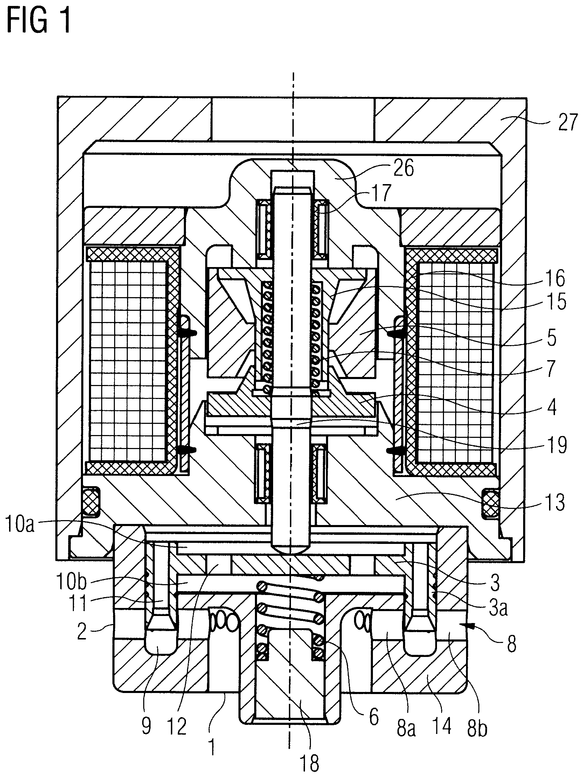

In den Fig. 1 bis 4 ist ein erstes Ausführungsbeispiel eines Kolbenschieberventils für einen Stoßdämpfer eines Kraftfahrzeugs in unterschiedlichen Zuständen dargestellt. Bei dem Ventil handelt es sich um ein elektromagnetisch betätigtes Kolbenschieberventil mit einer elektrisch bestrombaren Spule 16, zwei Magnetankern 4, 5 sowie einem ortsfesten Polteil 13 als Teil des Eisenkreises. Die Funktion der Magnetanker 4, 5 im Zusammenspiel mit zwei entsprechenden Vorspannfedern 6, 7 wird nachfolgend im Detail erläutert.

Das Ventil weist ein Gehäuse 27 sowie ein erstes Ventilgehäuseteil 14, wie hier eine Buchse, mit einem axialen Fluidanschluss 1 und einem radialen Fluidanschluss 2 auf. Die Fluidanschlüsse 1, 2 sind über Fluidkanäle 8 miteinander verbunden, deren Öffnungsquerschnittsfläche mittels eines Kolbens 3 variiert werden kann. Wie in der Schnittansicht zu erkennen ist, verlaufen mehrere Fluidkanäle 8, vorzugsweise gleichmäßig über den Umfang des Ventils verteilt in radialer Richtung. Der Strömungsquerschnitt aller Fluidkanäle 8 lässt sich mittels eines ringartigen Abschnitts 3a des Kolbens 3 einstellen.

Ein Fluidstrom kann das Kolbenschieberventil in beiden Richtungen durchströmen, d.h. sowohl von dem axialen Fluidanschluss 1 hin zu dem radialen Fluidanschluss 2 und umgekehrt. Es sind keine getrennten Ventile für die unterschiedlichen Strömungsrichtungen notwendig. Dies wird durch die bezüglich des Kolbenabschnitts 3a symmetrische Ausgestaltung der beiden Abschnitte 8a, 8b der Fluidkanäle 8 erreicht, die radial innerhalb und radial außerhalb des Kolbenabschnitts 3a angeordnet sind. In dem konkreten Ausführungsbeispiel sind jeweils linear verlaufende Abschnitte 8a, 8b der Fluidkanäle 8 vorgesehen, die einen konstanten Querschnitt aufweisen.

Zur Führung des Kolbens 3 ist eine umlaufende Nut 9 vorgesehen, in welcher der Kolben 3 radial außen geführt ist, gegebenenfalls auch sowohl radial innen als auch radial außen. Die Nut 9 erstreckt sich in beiden axialen Richtungen über die Fluidkanäle 8 hinaus, so dass die in die Fluidkanäle eingreifenden Kolbenabschnitte 3a die Fluidkanäle 8 vollständig kreuzen kann. Der Kolben 3 kann umlaufende Kerben aufweisen, um das Gleiten des Kolbens 3 in der Nut 9 zu verbessern.

Der Kolben 3 weist axiale Fluiddurchtrittsöffnungen 11, 12 auf, damit er druckausgeglichen bewegt werden kann. Zum einen sind axiale Fluiddurchtrittsöffnungen 11 in den Kolbenabschnitten 3a vorgesehen, welche die Fluidkanäle 8 mit einem Hohlraum 10a, 10b verbinden, in welcher der Kolben 3 geführt ist. Somit kann ein Fluid von den Fluidkanälen 8 in einen Teil 10a des Hohlraums auf einer Seite des Kolbens 3 gelangen. Weitere axiale Fluiddurchtrittsöffnungen 12 sind in dem Kolben 3 vorgesehen, um die Teile 10a, 10b des Hohlraums auf beiden Seiten des Kolbens 3 miteinander zu verbinden. Dadurch, dass der Kolben 3 beidseitig von Fluid umgeben ist, welches durch die Fluiddurchtrittsöffnungen 12 zwischen beiden Seiten strömen kann, ist weniger Magnetkraft zum Verlagern des Kolbens 3 notwendig und der Kolben 3 reagiert weniger sensibel auf Strömungskräfte. In dem Hohlraum, genauer gesagt in beiden Teilen 10a, 10b des Hohlraums, stellt sich ein gegenüber dem Eingangsdruck reduzierter Druck ein. Dieser Zwischendruck liegt betragsmäßig zwischen dem Eingangsdruck und dem Ausgangsdruck.

Fig. 1 zeigt das Kolbenschieberventil im unbestromten Zustand, das heißt in der so genannten Fail-Safe-Stellung, in der sich das Ventil im abgeschalteten Zustand oder auch bei einem Ausfall der Stromversorgung befindet. Das Kolbenschieberventil ist normal offen, insbesondere teilweise offen. Dieser Zwischenzustand wird durch die Kolbenschieberanordnung mit zwei Magnetankern 4, 5 erreicht. Der erste Magnetanker 4 ist mit einem Stößel 19 fest verbunden, beispielsweise verpresst, der auf den Kolben 3 wirkt. Der Stößel 19 ist axial verschieblich gelagert, in diesem Ausführungsbeispiel mittels Wälzlagern 17. Die vorzugsweise progressive erste Vorspannfeder 6 drängt den Kolben 3 in eine Offenstellung in Richtung des Stößels 19 und stützt sich dabei rückwärtig gegen das erste Ventilgehäuseteil 14 ab. In dem in Fig. 1 dargestellten Zustand herrscht ein Gleichgewichtszustand zwischen der ersten Vorspannfeder 6 und der zweiten Vorspannfeder 7. Die zweite Vorspannfeder 7 ist zwischen dem ersten Magnetanker 4 und dem zweiten Magnetanker 5 angeordnet und drängt diese auseinander. Dazu ist ein Führungsteil 15 aus einem nicht magnetischen Material vorgesehen, das die zweite Vorspannfeder 7 stützt und mit dem zweiten Magnetanker 5 fest verbunden, beispielsweise verpresst, ist. Insbesondere stützt sich der zweite Magnetanker 5 über das Führungsteil 15 gegen ein zweites Ventilgehäuseteil 26 ("Magnettopf") ab, so dass die Kräfte der ersten und zweiten Vorspannfeder 6, 7 einander entgegenwirken. Im in Fig. 1 dargestellten Fail-Safe-Zustand sind der erste und zweite Magnetanker 4, 5 getrennt und der Kolben 3 verschließt die Fluidkanäle 8 teilweise, beispielsweise zur Hälfte. Eine Justierschraube 18 ist im ersten Ventilgehäuseteil 14 vorgesehen, mittels der die Vorspannung der ersten Vorspannfeder 6 eingestellt werden kann.

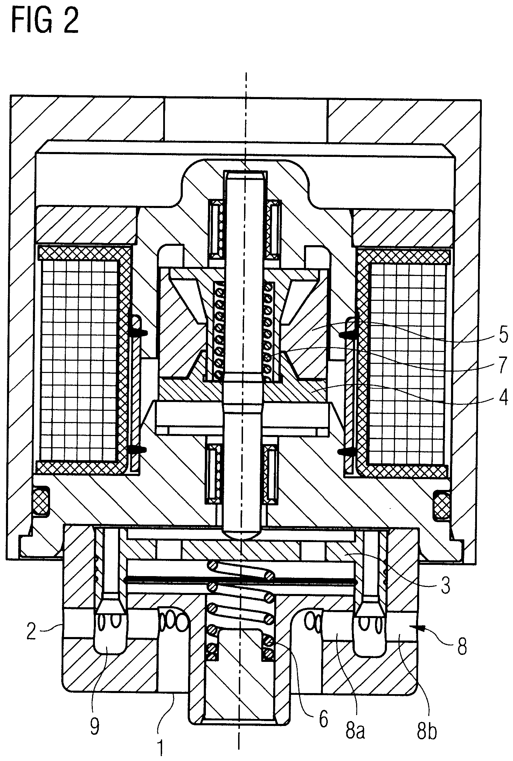

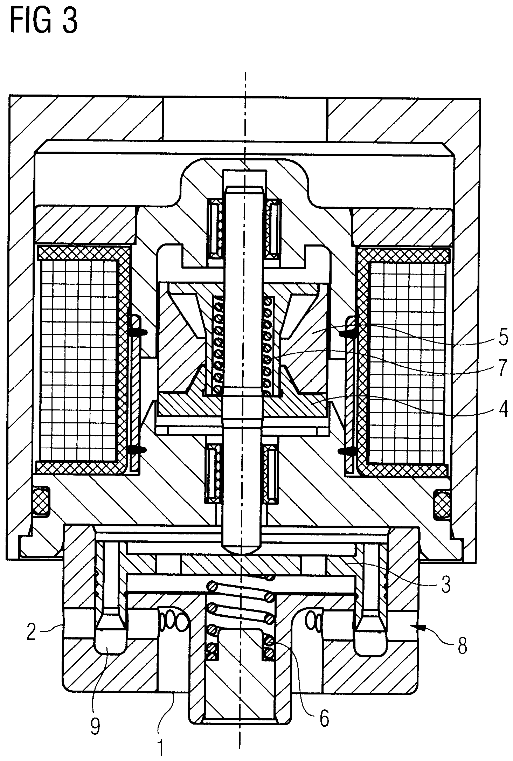

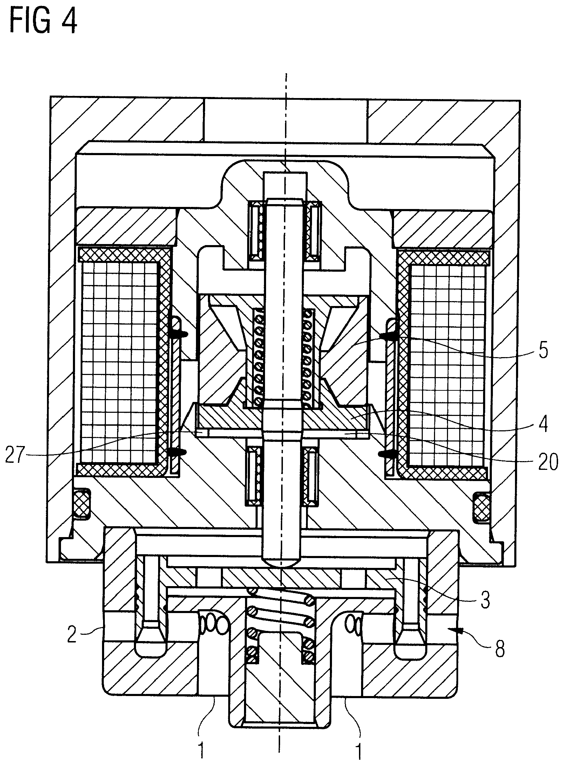

Zum Öffnen des Ventils erfolgt eine kurze Initialbestromung, so dass der Kolben 3 in Richtung der Kraft der ersten Vorspannfeder 6 und entgegen der Kraft der zweiten Vorspannfeder 7 axial verlagert wird, bis der erste Magnetanker 4 an dem zweiten Magnetanker 5 anliegt. Aufgrund des direkten flächigen Kontakts zwischen dem ersten Magnetanker 4 und dem zweiten Magnetanker 5 und der daraus resultierenden magnetischen Haftung bleibt der erste Magnetanker 4 auch bei einer Reduzierung der Stromstärke unter den Wert der Initialbestromung an dem zweiten Magnetanker 5 haften, da die zweite Vorspannfeder 7 verhältnismäßig schwach ist, insbesondere schwächer als die erste Vorspannfeder 6. Dieser Zustand ist in Fig. 2 dargestellt. Die Fluidkanäle 8 sind maximal geöffnet. Dabei befindet sich der zweite Magnetanker 5 in der gleichen Stellung wie in der in Fig. 1 dargestellten stromlosen Stellung, da die anliegende Stromstärke zwar noch groß genug ist, um die beiden Magnetanker 4, 5 aneinander haften zu lassen, jedoch nicht ausreicht, um die Kraft der ersten Vorspannfeder 6 zu überwinden. Daher ist das Ventil bei einer relativ geringen Stromstärke bereits maximal geöffnet.
Bei weiterer Bestromung, d.h. bei einem Erhöhen der Stromstärke, bewegen sich der erste und zweite Magnetanker 4, 5 nun gemeinsam weiter, da sie aneinander haften. Mit anderen Worten findet keine relative Bewegung mehr zwischen dem ersten und zweiten Magnetanker 4, 5 statt, sondern die Magnetanker 4, 5 bilden einen vereinten Magnetanker, der mittels der Magnetkraft entgegen der Kraft der ersten Vorspannfeder 6 in Richtung des Polteils 13 bewegt wird. In Fig. 3 ist ein angedrosselter Zustand des Kolbenschieberventils dargestellt, in der die freie Querschnittsfläche der Fluidkanäle 8 verringert ist. Bei noch weiterer Erhöhung der Stromstärke bewegt sich der Kolben 3 weiter in Richtung des Polteils 13, so dass die Fluidkanäle 8 verschlossen werden. Dieser Zustand ist in Fig. 4 dargestellt. Insbesondere kann sich der Kolben 3 in der Nut 9 über den Querschnitt der Fluidkanäle 8 hinaus bewegen und in den Endbereich der Nut 9 eintauchen. Um jedoch ein magnetisches Kleben zwischen dem ersten Magnetanker 4 und dem Polteil 13 zu verhindern, bleibt ein Luftspalt 20 bestehen. Dazu ist ein Anschlag 27 vorgesehen, gegen den der erste Magnetanker 4 ab dem Erreichen einer bestimmten Stromstärke anschlägt.

Ab dem Unterschreiten einer Minimalbestromung überwindet die Kraft der zweiten Vorspannfeder 7 die magnetische Haftkraft zwischen dem ersten Magnetanker 4 und dem zweiten Magnetanker 5, so dass der Kolben 3 in seine Ausgangsposition bewegt wird (Fail-Safe-Stellung) und sich das Gleichgewicht der Kräfte der ersten und zweiten Vorspannfeder 6, 7 wieder einstellt. Es versteht sich, dass je nach Anwendungsfall auch andere Ventilstellungen gewünscht sein können, beispielsweise ein normal geschlossenes Ventil. Entsprechend kann die Anordnung von Magnetankern und Vorspannfedern gewählt werden.

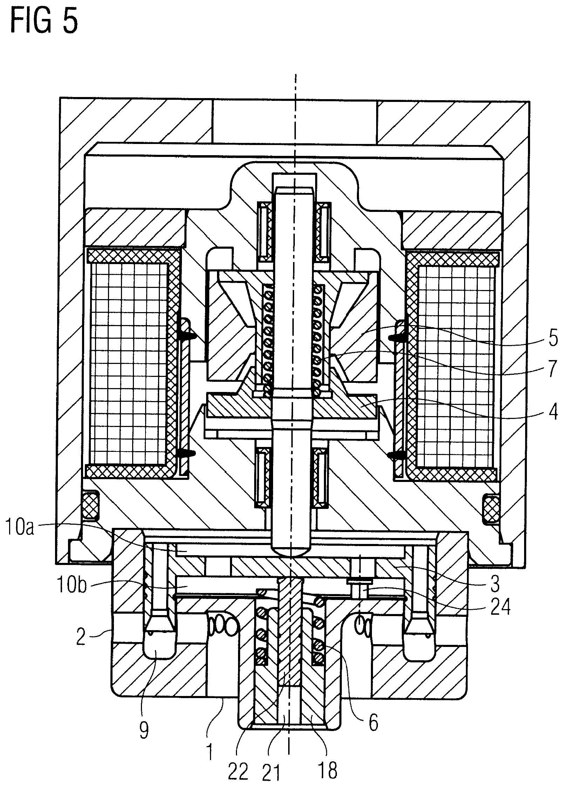

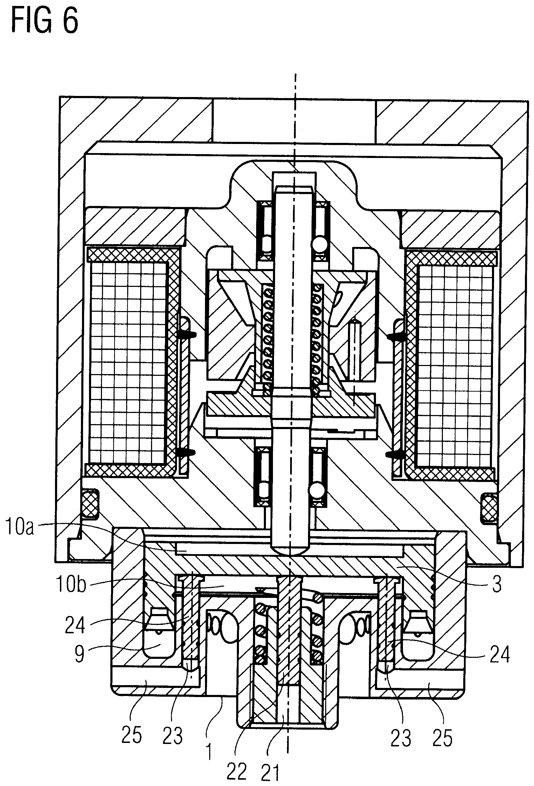

In Fig. 5 und 6 ist ein zweites Ausführungsbeispiel eines Kolbenschieberventils dargestellt, welches im Wesentlichen dem ersten Ausführungsbeispiel entspricht. Im Gegensatz zu dem in Fig. 1 bis 4 dargestellten Ausführungsbeispiel ist das in Fig. 5 und 6 dargestellte Ventil als Drosselventil mit Kennlinienbeeinflussung ausgebildet. Die Kennlinienbeeinflussung bzw. Strömungskraftkompensation wird über Druckrückführstifte 22, 24 erreicht, welche eingerichtet sind, den Kolben 3 in Richtung der Offenstellung zu drängen. Dazu sind entsprechende axiale Bohrungen 21, 23 vorgesehen, in denen jeweils ein Druckrückführstift 22, 24, auch Druckfühlstift oder Druckrückführkolben genannt, verlagerbar angeordnet ist.

Dem axialen Fluidanschluss 1 ist ein Druckrückführstift 22 in der Bohrung 21 zugeordnet, welche hier durch die Justierschraube 18 führt. Liegt ein Druck an dem axialen Fluidanschluss 1 an, so unterstützt der Druckrückführstift 22 ein Öffnen des freien Querschnitts der Fluidkanäle 8, da er den anliegenden Druck auf den Kolben 3 überträgt. Dies wird durch ein Druckgefälle ermöglicht, da sich, wie zuvor erläutert, in dem Hohlraum 10a, 10b ein Zwischendruck einstellt, der zwischen dem Eingangsdruck und dem Ausgangsdruck liegt. Durch geeignete Auslegung des Druckrückführstifts 22 lässt sich so die Kennlinie des Ventils gezielt beeinflussen, d.h. beispielsweise den Druckverlust am Ventil in Abhängigkeit vom Volumenstrom. Strömungskräfte können kompensiert werden, da ein steigender Druck über den Druckrückführstift 22 ein Öffnen des Ventils bewirkt. Dieses Verhalten kann auch als Blow-Off-Effekt ausgenutzt werden, wobei beispielsweise ein hoher Volumenstrom aufgrund eines Stoßes auf den Stoßdämpfer ein Öffnen auch eines stark gedrosselten oder geschlossenen Ventils bewirkt.

Gleichermaßen ist eine derartige Strömungskraftkompensation auch für die umgekehrte Durchströmungsrichtung vorgesehen, bei welcher der Eingangsdruck an dem radialen Fluidanschluss 2 anliegt. Zur besseren Darstellbarkeit ist die Ansicht in Fig. 6 im Vergleich zu Fig. 5 um 45° um die Ventilachse gedreht, so dass die beiden Druckrückführstifte 24 besser erkennbar sind. Dem radialen Fluidanschluss 2 sind zwei Druckrückführstifte 24 zugeordnet, um den Eingangsdruck symmetrisch auf den Kolben 3 übertragen zu können. Um die axialen Bohrungen 23 an den Fluidanschluss 2 anzubinden, der in Fig. 6 aufgrund der Schnittdarstellung nicht zu sehen ist, sind hier radiale Anschlussbohrungen 25 bereitgestellt. Die Funktionsweise der Druckrückführstifte 24 entspricht ansonsten der Funktionsweise des Druckrückführstifts 22. Je nach Strömungsrichtung sind jeweils nur die Druckrückführstifte aktiv, die dem Fluidanschluss zugeordnet sind, an dem der Druck anliegt, wobei die anderen Druckrückführstifte solange ohne Funktion sind. Es kann so ein Ventil geschaffen werden, das in beiden Strömungsrichtungen im Wesentlichen die gleiche Ventilcharakteristik aufweist, so dass keine separaten Ventile für jede Strömungsrichtung notwendig sind.

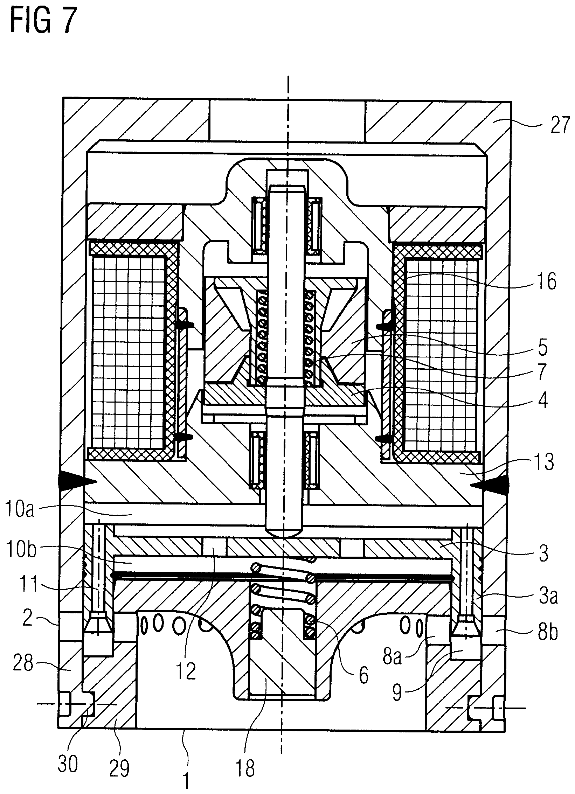

In Fig. 7 ist ein drittes Ausführungsbeispiel eines Kolbenschieberventils dargestellt, welches in Funktion und Aufbau im Wesentlichen dem in den Fig. 1 bis 4 dargestellten ersten Ausführungsbeispiel entspricht. Der dargestellte angedrosselte Zustand entspricht dem in Fig. 3 dargestellten Zustand. Im Unterschied zu dem ersten Ausführungsbeispiel sind in dem dritten Ausführungsbeispiel gemäß Fig. 7 die beiden Abschnitte 8a, 8b des Fluidkanals 8 nicht in einem Ventilgehäuseteil, sondern in zwei separaten Bauteilen ausgebildet. Der jeweils radial außen liegende Abschnitt 8b der Fluidkanäle 8 ist in einem Teil 28 des Gehäuses 27 ausgebildet, so dass radial außen der radiale Fluidanschluss 2 gebildet wird. Hierzu ist das Gehäuse 27 im Vergleich zu dem ersten Ausführungsbeispiel in axialer Richtung länger ausgebildet und erstreckt sich über die gesamte Länge des Ventils. Ein weiteres Ventilgehäuseteil 29 ist in den Teil 28 des Gehäuses 27 eingesetzt, in welchem jeweils der radial innen liegende Abschnitt 8a der Fluidkanäle ausgebildet ist, wobei die beiden Abschnitte 8a, 8b der Fluidkanäle 8 vorteilhafterweise jeweils zueinander fluchten. Das Ventilgehäuseteil 29 ist teilweise hohl ausgebildet und bildet den axialen Fluidanschluss 1. Das Ventilgehäuseteil 29 ist mit dem Teil 28 des Gehäuses 17 auf bekannte Weise verbunden, beispielsweise durch einen Formschluss 30 oder durch Verschweißen, Verkleben und dergleichen.

Es versteht sich, dass auch das Ventil gemäß Fig. 7 mit einer Kennlinienbeeinflussung versehen werden kann, wie im Zusammenhang mit Fig. 5 und 6 beschrieben. Hierzu können analog zu dem vorherigen Ausführungsbeispiel entsprechende Druckrückführstifte vorgesehen werden.

## Patentansprüche

1. Elektromagnetisch betätigtes Kolbenschieberventil, umfassend:
- ein Ventilgehäuse mit einem ersten Fluidanschluss (1) und einem zweiten Fluidanschluss (2) und zumindest einem die beiden Fluidanschlüsse (1, 2) verbindenden Fluidkanal (8),
- eine elektrisch bestrombare Spule (16) zur Erzeugung eines elektromagnetischen Feldes,
- eine Kolbenschieberanordnung mit einem Kolben (3), der zum Regeln einer freien Querschnittsfläche des Fluidkanals (8) durch Bestromung der Spule (16) entgegen einer Kraft mindestens einer ersten Vorspannfeder (6) axial verschieblich ist und einen ringartigen Kolbenabschnitt (3a) aufweist, der in den Fluidkanal (8) eingreift,
**dadurch gekennzeichnet, dass** ein Abschnitt (8a) des Fluidkanals (8), der an den in den Fluidkanal (8) eingreifenden Kolbenabschnitt (3a) radial innen angrenzt, und ein Abschnitt (8b) des Fluidkanals (8), der an den in den Fluidkanal (8) eingreifenden Kolbenabschnitt (3a) radial außen angrenzt, bezüglich des in den Fluidkanal (8) eingreifenden Kolbenabschnitts (3a) zueinander derart symmetrisch sind, dass sich in beiden Strömungsrichtungen die gleiche Strömungscharakteristik ergibt, wobei radial innen und radial außen direkt an den Kolbenabschnitt (3a) angrenzende Strömungsquerschnitte des Fluidkanals (8) identisch ausgebildet sind.

2. Kolbenschieberventil nach Anspruch 1, wobei der an den Kolbenabschnitt (3a) radial innen angrenzende Abschnitt (8a) des Fluidkanals (8) und der an den Kolbenabschnitt (3a) radial außen angrenzende Abschnitt (8b) des Fluidkanals (8) zueinander fluchtend in radialer Richtung verlaufen.

3. Kolbenschieberventil nach Anspruch 2, wobei der Kolbenabschnitt (3a) in einer umlaufenden Nut (9) im Inneren des Ventilgehäuses radial außen geführt ist.

4. Kolbenschieberventil nach Anspruch 3, wobei die Nut (9) den Fluidkanal (8) derart quert, dass sie sich axial in beide Richtungen über einen Querschnitt des Fluidkanals (8) hinaus erstreckt.

5. Kolbenschieberventil nach einem der Ansprüche 1 bis 4, wobei ein Hohlraum (10a, 10b) vorgesehen ist, in welchem der Kolben (3) axial verschieblich ist, und der Kolbenabschnitt (3a) zumindest eine axiale Fluiddurchtrittsöffnung (11) aufweist, welche den Fluidkanal (8) mit einem Teil (10a) des Hohlraums (10a, 10b) verbindet.

6. Kolbenschieberventil nach Anspruch 5, wobei der Kolben (3) zumindest eine weitere axiale Fluiddurchtrittsöffnung (12) aufweist, welche Teile (10a, 10b) des Hohlraums (10a, 10b) auf axial gegenüberliegenden Seiten des Kolbens (3) miteinander verbindet.

7. Kolbenschieberventil nach einem der Ansprüche 1 bis 6, wobei zumindest eine axiale Bohrung (21, 23) vorgesehen ist, welche an einen der Fluidanschlüsse (1, 2) angrenzt und in welcher ein axial verschieblicher Druckrückführstift (22, 24) derart angeordnet ist, dass ein Fluiddruck an dem entsprechenden Fluidanschluss (1, 2) mittels des Druckrückführstifts (22, 24) auf den Kolben (3) übertragbar ist, so dass der Kolben (3) in Richtung einer Offenstellung gedrängt wird.

8. Kolbenschieberventil nach Anspruch 7, wobei zwei oder mehr der axialen Bohrungen (21, 23) vorgesehen sind, wobei jedem der Fluidanschlüsse (1, 2) zumindest eine der Bohrungen (21, 23) zugeordnet ist, wobei in jeder der Bohrungen (21, 23) jeweils ein axial verschieblicher Druckrückführstift (22, 24) derart angeordnet ist, dass ein Fluiddruck an dem entsprechenden Fluidanschluss (1, 2) mittels des Druckrückführstifts (22, 24) auf den Kolben (3) übertragbar ist, so dass der Kolben (3) in Richtung einer Offenstellung gedrängt wird.

9. Kolbenschieberventil nach einem der Ansprüche 1 bis 8, wobei die erste Vorspannfeder (6) eine progressive Federkennlinie aufweist.

10. Kolbenschieberventil nach einem der Ansprüche 1 bis 9, wobei die Kolbenschieberanordnung einen ersten und einen zweiten jeweils axial verschieblichen Magnetanker (4, 5) umfasst, wobei der erste und zweite Magnetanker (4, 5) durch Bestromung der Spule (16) entgegen einer Kraft mindestens einer zweiten Vorspannfeder (7) axial aufeinander zu verschieblich sind,
wobei sich der Kolben (3) im stromlosen Zustand der Spule (16) vorzugsweise in einer Zwischenstellung befindet, in welcher der Fluidkanal (8) durch den Kolbenabschnitt (3a) teilweise freigegeben ist.

11. Kolbenschieberventil nach Anspruch 10, wobei die Kräfte der ersten und zweiten Vorspannfeder (6, 7) in entgegengesetzte Richtungen wirken und wobei sich der erste und zweite Magnetanker (4, 5) mittels einer Initialbestromung der Spule (16) gegen die Kraft der zweiten Vorspannfeder (7) derart aufeinander zu bewegen lassen, dass sie aufeinander treffen, wobei der erste und zweite Magnetanker (4, 5) in dieser Stellung gehalten werden, solange die Bestromung der Spule (16) nicht unter eine Minimalbestromung absinkt, und wobei der Kolben (3) bei der Minimalbestromung mittels der ersten Vorspannfeder (6) in eine Stellung gedrängt wird, in welcher die Querschnittsfläche des Fluidkanals (8) von dem Kolbenabschnitt (3a) maximal freigegeben ist.

12. Kolbenschieberventil nach Anspruch 11, wobei die Kräfte der ersten und zweiten Vorspannfeder (6, 7) derart wirken, dass sich oberhalb der Minimalbestromung die gesamte Kolbenschieberanordnung als Einheit entgegen der Kraft der ersten Vorspannfeder (6) in eine Richtung bewegt, in der sich die freie Querschnittsfläche des Fluidkanals (8) durch den Kolbenabschnitt (3a) verringert.

13. Kolbenschieberventil nach Anspruch 11 oder 12, wobei die Kräfte der ersten und zweiten Vorspannfeder (6, 7) derart wirken, dass sich ab Unterschreiten der Minimalbestromung, deren Wert kleiner ist als der der Initialbestromung, der erste und zweite Magnetanker (4, 5) voneinander weg bewegen und sich ein Gleichgewicht der Kräfte der ersten und zweiten Vorspannfeder (6, 7) einstellt, wenn sich der Kolben (3) in Richtung der Zwischenstellung bewegt hat, in welcher der Fluidkanal (8) durch den Kolbenabschnitt (3a) teilweise freigegeben ist.

14. Stoßdämpfer für ein Fahrzeug, umfassend ein Kolbenschieberventil nach einem der Ansprüche 1 bis 13.

15. Verfahren zum Betreiben eines Kolbenschieberventils nach einem der Ansprüche 10 bis 13, umfassend die Schritte:
- Bestromen des Kolbenschieberventils mindestens mit einer Initialstromstärke, bei der sich der erste und zweite Magnetanker (4, 5) gegen die Kraft der zweiten Vorspannfeder (7) aufeinander zu bewegen und aufeinander treffen, wobei sich der Kolben (3) mittels der Kraft der ersten Vorspannfeder (6) in eine Offenstellung bewegt,
- Reduzieren der Stromstärke unter den Wert der Initialstromstärke, jedoch nicht unter den Wert einer Minimalstromstärke, bei der der erste Magnetanker (4) und der zweite Magnetanker (5) gerade noch magnetisch aneinander haften bleiben, und
- Erhöhen der Stromstärke zum Drosseln eines Fluidstroms, wobei die Stromstärke in Abhängigkeit von der gewünschten Drosselwirkung zumindest über den Wert der Minimalstromstärke hinaus erhöht wird, so dass die gesamte Kolbenschieberanordnung als Einheit gegen die Kraft der ersten Vorspannfeder (6) bewegt und die freie Querschnittsfläche des Fluidkanals (8) verringert wird,
wobei bei Unterschreiten der Minimalstromstärke der erste und zweite Magnetanker (4, 5) vorzugsweise voneinander weg bewegt werden und sich ein Gleichgewicht der Kräfte der ersten und zweiten Vorspannfeder (6, 7) einstellt, wenn sich der Kolben (3) in Richtung einer Zwischenstellung bewegt hat, in der der Fluidkanal (8) durch den Kolbenabschnitt (3a) teilweise freigegeben ist.

## Claims

1. An electromagnetically actuated piston slide valve, comprising:
- a valve housing with a first fluid port (1) and a second fluid port (2) and at least one fluid channel (8) connecting the two fluid ports (1, 2),
- an electrically energizable coil (16) for generating an electromagnetic field,
- a piston slide arrangement with a piston (3) which for controlling a free cross-sectional area of the fluid channel (8) is axially displaceable, by energization of the coil (16), against a force of at least one first biasing spring (6) and has a ring-like piston portion (3a) which engages in the fluid channel (8),
**characterized in that** a portion (8a) of the fluid channel (8), which borders on the piston portion (3a) engaging in the fluid channel (8) radially inward, and a portion (8b) of the fluid channel (8), which borders on the piston portion (3a) engaging in the fluid channel (8) radially outward, are symmetrical to each other, relative to the piston portion (3a) engaging in the fluid channel (8), in such a way that in both flow directions there arises the same flow characteristic, wherein flow cross sections of the fluid channel (8) directly bordering on the piston portion (3a) radially inward and radially outward are configured identically.

2. The piston slide valve according to claim 1, wherein the portion (8a) of the fluid channel (8) which borders on the piston portion (3a) radially inward and the portion (8b) of the fluid channel (8) which borders on the piston portion (3a) radially outward extend in radial direction in alignment to each other.

3. The piston slide valve according to claim 2, wherein the piston portion (3a) is guided radially outward in a circumferential groove (9) in the interior of the valve housing.

4. The piston slide valve according to claim 3. wherein the groove (9) crosses the fluid channel (8) such that it extends axially in both directions beyond a cross section of the fluid channel (8).

5. The piston slide valve according to any of claims 1 to 4, wherein a cavity (10a, 10b) is provided in which the piston (3) is axially displaceable, and the piston portion (3a) has at least one axial fluid passage opening (11) which connects the fluid channel (8) with a part (10a) of the cavity (10a, 10b).

6. The piston slide valve according to claim 5, wherein the piston (3) has at least one further axial fluid passage opening (12) which connects parts (10a, 10b) of the cavity (10a, 10b) on axially opposing sides of the piston (3) with each other.

7. The piston slide valve according to any of claims 1 to 6, wherein at least one axial bore (21, 23) is provided which borders on one of the fluid ports (1, 2) and in which an axially displaceable pressure return pin (22, 24) is disposed such that a fluid pressure at the corresponding fluid port (1, 2) is transferable to the piston (3) by means of the pressure return pin (22, 24), so that the piston (3) is urged in the direction of an open position.

8. The piston slide valve according to claim 7, wherein two or more of the axial bores (21, 23) are provided, wherein each of the fluid ports (1, 2) has associated therewith at least one of the bores (21, 23), wherein in each of the bores (21, 23) there is disposed respectively one axially displaceable pressure return pin (22, 24) such that a fluid pressure at the corresponding fluid port (1, 2) is transferable to the piston (3) by means of the pressure return pin (22, 24), so that the piston (3) is urged in the direction of an open position.

9. The piston slide valve according to any of claims 1 to 8, wherein the first biasing spring (6) has a progressive spring characteristic.

10. The piston slide valve according to any of claims 1 to 9, wherein the piston slide arrangement comprises a first and a second magnetic armature (4, 5) respectively axially displaceable, wherein the first and second magnetic armature (4, 5) are axially displaceable, by energization of the coil (16), toward each other against a force of at least one second biasing spring (7) .
wherein the piston (3) in the de-energized state of the coil (16) preferably is in an interposition in which the fluid channel (8) is partially released by the piston portion (3a).

11. The piston slide valve according to claim 10 act, wherein the forces of the first and second biasing spring (6, 7) act in opposite directions and wherein the first and second magnetic armature (4, 5) can be moved toward each other by means of an initial energization of the coil (16) against the force of the second biasing spring (7) such that they hit each other, wherein the first and second magnetic armature (4, 5) are held in this position as long as the energization of the coil (16) does not drop below a minimum energization, and wherein at minimum energization the piston (3) is urged by means of the first biasing spring (6) into a position in which the cross-sectional area of the fluid channel (8) is released to a maximum by the piston portion (3a).

12. The piston slide valve according to claim 11, wherein the forces of the first and second biasing spring (6, 7) act such that above the minimum energization the entire piston slide arrangement as a unit moves against the force of the first biasing spring (6) in a direction in which the free cross-sectional area of the fluid channel (8) decreases by the piston portion (3a).

13. The piston slide valve according to claim 11 or 12, wherein the forces of the first and second biasing spring (6, 7) act such that with an undershooting of the minimum energization, the value thereof being smaller than that of the initial energization, the first and second magnetic armature (4, 5) move away from each other, and a balance of the forces of the first and second biasing spring (6, 7) ensues when the piston (3) has moved in the direction of the interposition in which the fluid channel (8) is partially released by the piston portion (3a).

14. A shock absorber for a vehicle, comprising a piston slide valve according to any of claims 1 to 13.

15. A method for operating a piston slide valve according to any of claims 10 to 13, comprising the steps of:
- energizing the piston slide valve at least with an initial current intensity, upon which the first and second magnetic armature (4, 5) move toward each other against the force of the second biasing spring (7) and hit each other, wherein the piston (3) moves into an open position by means of the force of the first biasing spring (6),
- reducing the current intensity below the value of the initial current intensity, but not below the value of a minimum current intensity upon which the first magnetic armature (4) and the second magnetic armature (5) just remain magnetically adhered to each other, and
- increasing the current intensity for choking a fluid stream, wherein the current intensity is increased in dependence of the desired choking effect at least beyond the value of the minimum current intensity, so that the entire piston slide arrangement as a unit is moved against the force of the first biasing spring (6) and the free cross-sectional area of the fluid channel (8) is decreased,
wherein upon an undershooting of the minimum current intensity the first and second magnetic armature (4, 5) are moved preferably away from each other and a balance of the forces of the first and second biasing spring (6, 7) ensues when the piston (3) has moved in the direction of the interposition in which the fluid channel (8) is partially released by the piston portion (3a).

## Revendications

1. Vanne à robinet à piston actionnée électromagnétiquement, comprenant :
- un boîtier de vanne ayant un premier raccordement de fluide (1) et un deuxième raccordement de fluide (2) ainsi qu'au moins un canal de fluide (8) reliant les deux raccordements de fluide (1, 2),
- une bobine (16) apte à être alimentée en courant destinée à la génération d'un champ électromagnétique,
- un agencement de robinets à piston comportant un piston (3) qui, pour le réglage d'une surface libre de section transversale du canal de fluide (8), peut, par alimentation de la bobine (16) en courant, coulisser axialement contre une force d'au moins un premier ressort de précontrainte (6) et qui comporte un tronçon annulaire de piston (3a) s'engageant dans le canal de fluide (8),
**caractérisé en ce qu'**un tronçon (8a) du canal de fluide (8) radialement adjacent intérieurement au tronçon de piston (3a) s'engageant dans le canal de fluide (8) et un tronçon (8b) du canal de fluide (8) radialement adjacent extérieurement au tronçon de piston (3a) s'engageant dans le canal de fluide (8) sont, par rapport au tronçon de piston (3a) s'engageant dans le canal de fluide (8), de telle manière symétriques entre eux que, dans les deux directions d'écoulement, la même caractéristique d'écoulement est obtenue, cependant que des sections transversales d'écoulement du canal de fluide (8) directement adjacentes radialement intérieurement et radialement extérieurement au tronçon de piston (3a) sont réalisées identiquement.

2. Vanne à robinet à piston selon la revendication 1, cependant que le tronçon (8a) du canal de fluide (8) radialement adjacent intérieurement au tronçon de piston (3a) et le tronçon (8b) du canal de fluide (8) radialement adjacent extérieurement au tronçon de piston (3a) s'étendent en direction radiale en alignement l'un par rapport à l'autre.

3. Vanne à robinet à piston selon la revendication 2, cependant que le tronçon de piston (3a) est guidé radialement extérieurement dans une rainure (9) périphérique à l'intérieur du boîtier de vanne.

4. Vanne à robinet à piston selon la revendication 3, cependant que la rainure (9) traverse de telle manière le canal de fluide (8) qu'elle s'étend axialement dans les deux directions au-delà d'une section transversale du canal de fluide (8).

5. Vanne à robinet à piston selon une des revendications de 1 à 4, cependant qu'une cavité (10a, 10b) est prévue, dans laquelle le piston (3) peut coulisser axialement, et que le tronçon de piston (3a) comporte au moins une ouverture axiale de passage de fluide (11) qui relie le canal de fluide (8) à une partie (10a) de la cavité (10a, 10b).

6. Vanne à robinet à piston selon la revendication 5, cependant que le piston (3) comporte au moins une autre ouverture axiale de passage de fluide (12) qui relie entre elles des parties (10a, 10b) de la cavité (10a, 10b) sur des côtés du piston (3) axialement opposés.

7. Vanne à robinet à piston selon une des revendications de 1 à 6, cependant qu'au moins un alésage axial (21, 23) est prévu, lequel est adjacent à un des raccordements de fluide (1, 2) et dans lequel une goupille de réacheminement de pression (22, 24) pouvant coulisser axialement est agencée de telle façon qu'une pression de fluide au raccordement de fluide (1, 2) correspondant peut, au moyen de la goupille de réacheminement de pression (22, 24), être transmise au piston (3), de telle sorte que le piston (3) est poussé en direction d'une position ouverte.

8. Vanne à robinet à piston selon la revendication 7, cependant que deux ou plusieurs des alésages axiaux (21, 23) sont prévus, cependant que, à chacun des raccordements de fluide (1, 2), au moins un des alésages (21, 23) est affecté, cependant que, dans chacun des alésages (21, 23), respectivement une goupille de réacheminement de pression (22, 24) pouvant coulisser axialement est agencée de telle façon qu'une pression de fluide au raccordement de fluide (1, 2) correspondant peut, au moyen de la goupille de réacheminement de pression (22, 24), être transmise au piston (3), de telle sorte que le piston (3) est poussé en direction d'une position ouverte.

9. Vanne à robinet à piston selon une des revendications de 1 à 8, cependant que le premier ressort de précontrainte (6) présente une courbe caractéristique de ressort progressive.

10. Vanne à robinet à piston selon une des revendications de 1 à 9, cependant que l'agencement de robinets à piston comporte une première et une deuxième armature d'aimant (4, 5) pouvant respectivement coulisser axialement, cependant que la première et la deuxième armature d'aimant (4, 5) peuvent, par alimentation de la bobine (16) en courant, coulisser axialement l'une vers l'autre contre une force d'au moins un deuxième ressort de précontrainte (7),
cependant que, quand la bobine (16) n'est pas alimentée en courant, le piston (3) se trouve de préférence dans une position intermédiaire dans laquelle le canal de fluide (8) est partiellement libéré par le tronçon de piston (3a).

11. Vanne à robinet à piston selon la revendication 10, cependant que les forces du premier et du deuxième ressort de précontrainte (6, 7) agissent dans des directions opposées, et cependant que la première et la deuxième armature d'aimant (4, 5) peuvent, au moyen d'une alimentation en courant initiale de la bobine (16), être déplacées de telle façon l'une vers l'autre contre la force du deuxième ressort de précontrainte (7) qu'elles se rencontrent, cependant que la première et la deuxième armature d'aimant (4, 5) sont maintenues dans cette position tant que l'alimentation de la bobine (16) en courant ne descend pas en-dessous d'une alimentation minimale, et cependant que le piston (3) est, lors de l'alimentation minimale, poussé au moyen du premier ressort de précontrainte (6) dans une position dans laquelle la surface de section transversale du canal de fluide (8) est libérée au maximum par le tronçon de piston (3a).

12. Vanne à robinet à piston selon la revendication 11, cependant que les forces du premier et du deuxième ressort de précontrainte (6, 7) agissent de telle façon que, au-dessus de l'alimentation minimale en courant, la totalité de l'agencement de robinets à piston se déplace en tant qu'unité contre la force du premier ressort de précontrainte (6) dans une direction dans laquelle la surface libre de section transversale du canal de fluide (8) est réduite par le tronçon de piston (3a).

13. Vanne à robinet à piston selon la revendication 11 ou 12, cependant que les forces du premier et du deuxième ressort de précontrainte (6, 7) agissent de telle façon que, à partir d'un sous-dépassement de l'alimentation en courant minimale dont la valeur est inférieure à celle de l'alimentation en courant initiale, la première et la deuxième armature d'aimant (4, 5) s'éloignent l'une de l'autre, et un équilibre des forces du premier et deuxième ressort de précontrainte (6, 7) est obtenu quand le piston (3) s'est déplacé en direction de la position intermédiaire dans laquelle le canal de fluide (8) est partiellement libéré par le tronçon de piston (3a).

14. Amortisseur destiné à un véhicule, comprenant une vanne à robinet à piston selon une des revendications de 1 à 13.

15. Procédé d'actionnement d'une vanne à robinet à piston selon une des revendications de 10 à 13, comprenant les étapes :
- alimentation de la vanne à robinet à piston en courant au moins à une intensité de courant initiale lors de laquelle la première et la deuxième armature d'aimant (4, 5), contre la force du deuxième ressort de précontrainte (7), se déplacent l'une vers l'autre et se rencontrent, cependant que le piston (3) se déplace, au moyen de la force du premier ressort de précontrainte (6), dans une position ouverte,
- réduction de l'intensité de courant en-dessous de la valeur de l'intensité de courant initiale, néanmoins pas en-dessous de la valeur d'une intensité de courant minimale lors de laquelle la première (4) et la deuxième armature d'aimant (5) adhèrent tout juste encore magnétiquement entre elles, et
- augmentation de l'intensité de courant pour réduire un flux de fluide, cependant que l'intensité de courant est, en fonction de l'effet de réduction souhaité, augmentée au moins au-delà de la valeur de l'intensité de courant minimale, de telle sorte que la totalité de l'agencement de robinets à piston se déplace en tant qu'unité contre la force du premier ressort de précontrainte (6) et que la surface libre de section transversale du canal de fluide (8) est réduite,
cependant que, lors d'un sous-dépassement de l'intensité de courant minimale, la première et la deuxième armature d'aimant (4, 5) s'éloignent de préférence l'une de l'autre, et qu'un équilibre des forces du premier et deuxième ressort de précontrainte (6, 7) est obtenu quand le piston (3a) s'est déplacé en direction d'une position intermédiaire dans laquelle le canal de fluide (8) est partiellement libéré par le tronçon de piston (3a).
